# EUROPEAN PATENT SPECIFICATION

(11) **EP 4 230 392 B1**
(45) Date of publication and mention of the grant of the patent: **24.04.2024**
(21) Application number: 22214464.4
(22) Date of filing: 19.12.2022
(51) Int. Cl.: B29D 30/06

(54) **TIRE MOLD AND PRODUCTION METHOD FOR TIRE**
REIFENFORM UND HERSTELLUNGSVERFAHREN FÜR REIFEN
MOULE DE PNEU ET PROCÉDÉ DE PRODUCTION DE PNEU

(30) Priority: 18.02.2022 JP 2022023627
(43) Date of publication of application: 23.08.2023
(73) Proprietor: Sumitomo Rubber Industries, Ltd., Kobe-shi, Hyogo 651-0072 (JP)
(72) Inventor: NONAKA, Kenji, Kobe-shi, 651-0072 (JP)
(74) Representative: Manitz Finsterwald Patent- und Rechtsanwaltspartnerschaft mbB

(56) References cited:
- EP-A1- 1 676 692
- EP-A2- 1 232 843
- JP-A- 2015 164 780

## Description

### CROSS-REFERENCE TO RELATED APPLICATIONS

[0000] This application claims priority on Japanese Patent Application No. 2022-23627 filed on February 18, 2022.

### TECHNICAL FIELD

The present invention relates to tire molds and production methods for tires.

### BACKGROUND ART

In production of a tire, an unvulcanized tire (hereinafter, green tire) is prepared by combining components such as a tread and sidewalls. Then, the green tire is placed into a mold.

The mold has a cavity surface. The green tire is pressed against the cavity surface in the mold. Accordingly, the outer surface of the tire is shaped on the green tire. By pressurizing and heating the green tire in the mold, the tire is obtained.

By pressing the green tire against the cavity surface, air that exists between the cavity surface and the green tire is discharged. If the air is not discharged sufficiently, the air remains and appearance defects such as bareness occur in the tire. From the viewpoint of sufficient air discharge, through holes (also referred to as vent holes) which provide communication between the inside and the outside of the mold are provided (for, example, PATENT LITERATURE 1 below).

### CITATION LIST

### [PATENT LITERATURE]

PATENT LITERATURE 1: Japanese Laid-Open Patent Publication No. 2015-164780
PATENT LITERATURE 2: EP 1 232 843 A2, which discloses the features of the preamble of independent claim 1.

### SUMMARY OF THE INVENTION

### [TECHNICAL PROBLEM]

A rubber composition for the green tire flows into the above-described through holes. The rubber composition that has flowed thereinto forms spews. For the performance of the tire, the spews are not necessary members. The spews impair the appearance of the tire. If a part of the spew remains in the through hole, in other words, if the through hole becomes clogged with rubber, the through hole loses its function as a through hole. The mold is cleaned. The cleaning of the mold affects the tire productivity.

The present invention has been made in view of such circumstances. An object of the present invention is to provide a tire mold and a production method for a tire that allow a tire having good appearance quality to be stably produced without impairing productivity.

### [SOLUTION TO PROBLEM]

A tire mold according to an aspect of the present is defined by independent claim 1.

Preferably, in the tire mold, the ventilation portion has a length of not greater than 20 mm.

Preferably, in the tire mold, the ventilation portion has a porosity of not less than 20% and not greater than 98%.

Preferably, in the tire mold, the center line average roughness Ra1 of the ventilation surface is not greater than 50 µm.

Preferably, in the tire mold, the ventilation piece has no through hole that provides communication between an inside and an outside of the mold.

Preferably, the tire mold further includes a tread ring for shaping a tread surface of the tire on the green tire. The tread ring includes a plurality of segments aligned in a circumferential direction of the tire. At least one segment among the plurality of segments is the ventilation piece.

A production method for a tire according to an aspect of the present invention includes a step of pressurizing and heating a green tire in a mold. The mold is the above-described tire mold.

### [ADVANTAGEOUS EFFECTS OF THE INVENTION]

According to the present invention, a tire mold and a production method for a tire that allow a tire having good appearance quality to be stably produced without impairing productivity, are obtained.

### BRIEF DESCRIPTION OF DRAWINGS

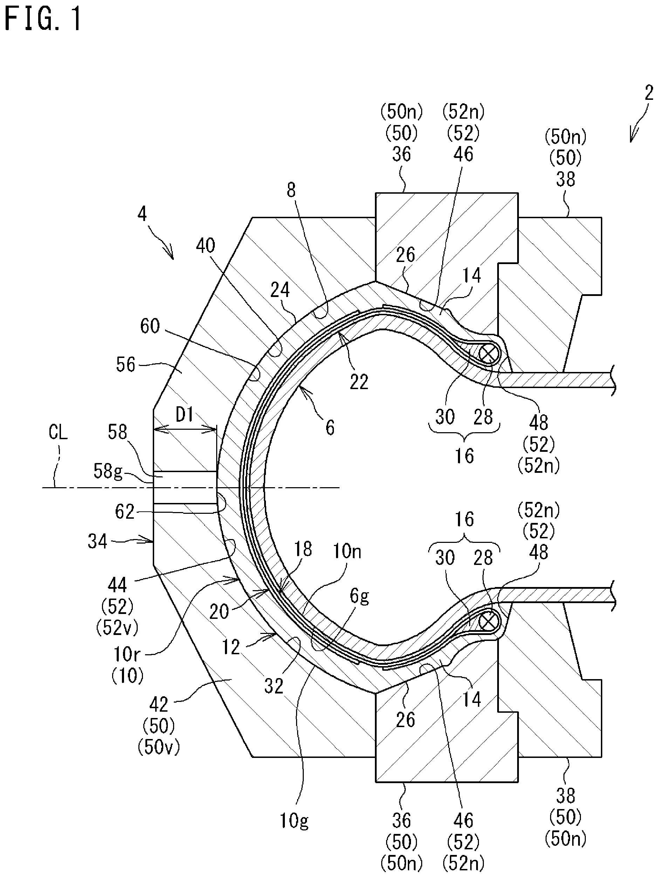

FIG. 1 is a cross-sectional view showing a part of a tire mold according to an embodiment of the present invention.

### DETAILED DESCRIPTION

The following will describe in detail the present invention based on preferred embodiments with appropriate reference to the drawing.

In the present invention, a rubber composition is a composition obtained by mixing a base rubber and chemicals in a kneading machine such as a Banbury mixer. The rubber composition contains an uncrosslinked base rubber. A crosslinked rubber is a crosslinked product, of the rubber composition, obtained by pressurizing and heating the rubber composition. The crosslinked rubber contains a crosslinked product of the base rubber. The crosslinked rubber is also referred to as a vulcanized rubber, and the rubber composition is also referred to as an unvulcanized rubber.

Examples of the base rubber include natural rubber (NR), butadiene rubber (BR), styrene-butadiene rubber (SBR), isoprene rubber (IR), ethylene-propylene rubber (EPDM), chloroprene rubber (CR), acrylonitrile-butadiene rubber (NBR), and isobutylene-isoprene-rubber (IIR). Examples of the chemicals include reinforcing agents such as carbon black and silica, plasticizers such as aromatic oil, fillers such as zinc oxide, lubricants such as stearic acid, antioxidants, processing aids, sulfur, and vulcanization accelerators. Selection of a base rubber and chemicals, the amounts of the selected chemicals, etc., are determined as appropriate according to the specifications of components such as a tread and sidewalls for which the rubber composition is used.

In the present invention, a green tire means an uncrosslinked tire. The green tire is also referred to as raw cover. By vulcanizing and molding the green tire, a tire is obtained. The tire is a crosslinked product of the green tire.

In the present invention, a tread portion of the tire is a portion of the tire that comes into contact with a road surface. A bead portion is a portion of the tire that is fitted to a rim. A side portion is a portion of the tire that extends between the tread portion and the bead portion. The tire includes a tread portion, a pair of bead portions, and a pair of side portions as portions thereof.

### [Production Method for Tire]

In order to produce a tire, a green tire is produced. In order to produce the green tire, uncrosslinked components such as a tread are prepared. The uncrosslinked components are combined in a forming machine, which is not shown, to obtain the green tire. The green tire is placed into a mold described later. In the mold, the green tire is pressurized and heated. Thus, the tire is obtained.

A production method for a tire according to an embodiment of the present invention includes a step of preparing a green tire, and a step (hereinafter, vulcanization molding step) of pressurizing and heating the green tire in a mold.

In the vulcanization molding step, a vulcanizing apparatus for obtaining a tire by pressurizing and heating a green tire is used.

FIG. 1 shows an example of a vulcanizing apparatus 2. The vulcanizing apparatus 2 includes a mold 4 and a bladder 6. Each of the mold 4 and the bladder 6 is mounted to the vulcanizing apparatus 2 by fixing means which is not shown.

The bladder 6 is composed of a bag-shaped crosslinked rubber. The interior of the bladder 6 is filled with a heating medium (for example, steam) or a pressurizing medium (for example, nitrogen gas). Accordingly, the bladder 6 expands. As shown in FIG. 1, a cavity 8 is formed between the mold 4 and the expanded bladder 6. In the cavity 8, a green tire 10r is pressurized and heated. Thus, a tire 10 is obtained. Although not shown, a rigid core may be used instead of the bladder 6.

In a production method for the tire 10, the vulcanizing apparatus 2 is not particularly limited as long as the tire 10 can be formed from the green tire 10r. In the production method, a general vulcanizing apparatus that is used for producing the tire 10 can be used. Although not shown, the vulcanizing apparatus 2 includes, in addition to the above-described fixing means for the mold 4 and the above-described fixing means for the bladder 6, for example, opening/closing means for opening and closing the mold 4, pressurizing means for pressurizing the green tire 10r housed in the cavity 8, heating means for heating the green tire 10r, and control means for controlling the operation of these means. In the production method for the tire 10, the vulcanization conditions such as temperature, pressure, and time are not particularly limited, and general vulcanization conditions are employed.

### [Tire 10]

The tire 10 shown in FIG. 1 is a motorcycle tire. The tire 10 is mounted to the rear wheel of a motorcycle. The tire 10 includes a tread 12, a pair of sidewalls 14, a pair of beads 16, a carcass 18, a band 20, and an inner liner 22.

The tread 12 has a tread surface 24 which comes into contact with a road surface. Each sidewall 14 is connected to an end of the tread 12. The sidewall 14 forms a side surface 26 of the tire 10. Each bead 16 is located radially inward of the sidewall 14. The carcass 18 is located inward of the tread 12 and the pair of sidewalls 14. The carcass 18 extends on and between a first bead 16 and a second bead 16. The band 20 is located between the tread 12 and the carcass 18 in the radial direction. The inner liner 22 is located inward of the carcass 18. The inner liner 22 forms an inner surface 10n of the tire 10.

The tread 12, the sidewalls 14, and the inner liner 22 are each formed from a crosslinked rubber. Although not shown, the carcass 18 and the band 20 include cords. The bead 16 includes a core 28 and an apex 30 formed from a crosslinked rubber.

The tire 10 has the same configuration as a configuration that is generally employed for a motorcycle tire. The detailed description of the tire 10 is omitted.

### [Mold 4]

The mold 4 shown in FIG. 1 is used for producing the above-described tire 10. A tire mold according to an embodiment of the present invention will be described with the mold 4 as an example. The technical idea of the mold 4 disclosed below can be applied not only to molds used for producing motorcycle tires, but also to molds used for producing tires for four-wheeled vehicles such as a passenger car, a bus, and a truck.

FIG. 1 shows a part of a cross-section of the mold 4 together with a part of a cross-section of the tire 10. In FIG. 1, a cross-section taken along a plane including the rotation axis of the tire 10 is shown.

In FIG. 1, the right-left direction is the radial direction of the tire 10, and the up-down direction is the axial direction of the tire 10. The direction perpendicular to the surface of the drawing sheet of FIG. 1 is the circumferential direction of the tire 10. An alternate long and short dash line CL represents the equator plane of the tire 10. For convenience of description, the dimensions of the mold 4 described below are represented on the basis of the dimensions of the tire 10.

The mold 4 has a cavity surface 32. The above-described cavity 8 is formed by the cavity surface 32 and an outer surface 6g of the bladder 6. The cavity surface 32 shapes an outer surface 10g of the tire 10 on the green tire 10r. The outer surface 6g of the bladder 6 shapes the inner surface 10n of the tire 10 on the green tire 10r.

In the present invention, a center line average roughness of the cavity surface 32 is measured using a "non-contact 3D measurement instrument" manufactured by Bruker Alicona. A value obtained by dividing an area represented by the product of a cross-sectional curve obtained from this measurement and its center line, by a measurement length, is used as the center line average roughness.

The mold 4 includes a tread ring 34, a pair of side plates 36, and a pair of bead rings 38. The mold 4 shown in FIG. 1 is in a state where the tread ring 34, the pair of side plates 36, and the pair of bead rings 38 are combined, that is, a state where the mold 4 is closed. The mold 4 may be a segmented mold. The mold 4 may be a two-piece mold.

The tread ring 34 shapes the tread surface 24. The tread ring 34 has a tread molding surface 40 on the inner peripheral side thereof. The tread molding surface 40 is a molding surface for shaping the tread surface 24 on the green tire 10r. The tread molding surface 40 is a part of the cavity surface 32.

The tread ring 34 of the mold 4 includes a plurality of segments 42. In a state where the mold 4 is closed, the plurality of segments 42 are aligned in the circumferential direction of the tire 10. By combining all the segments 42 to form the tread ring 34, the tread molding surface 40 is formed. Each segment 42 shapes a part of the tread surface 24. The segment 42 has a molding surface 44 (hereinafter, small molding surface). The small molding surface 44 is a part of the tread molding surface 40.

Each side plate 36 is located radially inward of the tread ring 34. The side plate 36 is connected to an end of the tread ring 34. The side plate 36 has a sidewall molding surface 46 in the axially inner surface thereof. The sidewall molding surface 46 is a molding surface for shaping the side surface 26 on the green tire 10r. The sidewall molding surface 46 is a part of the cavity surface 32.

Each bead ring 38 is located radially inward of the side plate 36. The bead ring 38 is connected to an end of the side plate 36. The bead ring 38 has a bead molding surface 48 in the radially outer surface thereof. The bead molding surface 48 is a molding surface for shaping a contact surface, which is to be brought into contact with a rim (not shown), on the green tire 10r. The bead molding surface 48 is a part of the cavity surface 32.

The mold 4 is formed by combining the plurality of segments 42, the pair of side plates 36, and the pair of bead rings 38. Each of the plurality of segments 42, the pair of side plates 36, and the pair of bead rings 38 is a piece 50 forming the mold 4. The mold 4 includes a plurality of pieces 50.

Each of the plurality of pieces 50 has a molding surface 52, and the cavity surface 32 for shaping the outer surface 10g of the tire 10 on the green tire 10r is formed by combining these pieces 50.

In the mold 4, at least one piece 50 among the plurality of pieces 50 is a ventilation piece 50v. In the mold 4 shown in FIG. 1, the segment 42 shown in FIG. 1 is a ventilation piece 50v.

At least one segment 42 among the plurality of segments 42 forming the tread ring 34 may be a ventilation piece 50v, or all the segments 42 forming the tread ring 34 may be ventilation pieces 50v. Each side plate 36 may be a ventilation piece 50v, or each bead ring 38 may be a ventilation piece 50v. All the pieces 50 forming the mold 4 may be ventilation pieces 50v.

In the present invention, among the plurality of pieces 50 forming the mold 4, the pieces 50 other than the ventilation pieces 50v are referred to as normal pieces 50n.

Each ventilation piece 50v includes a non-ventilation portion 56 and a ventilation portion 58.

The non-ventilation portion 56 is a metal cast. The non-ventilation portion 56 is composed of a solid member including no gaps. The non-ventilation portion 56 is a non-porous body. The non-ventilation portion 56 does not allow gas to pass therethrough.

Similar to the non-ventilation portion 56, the above-described normal pieces 50n are each composed of a metal cast.

Examples of the metal forming the non-ventilation portion 56 include steel, aluminum alloys, stainless steel, and titanium alloys.

The ventilation portion 58 is a porous metal. Although not shown, the ventilation portion 58 includes micro gaps. The ventilation portion 58 is a porous body. The sizes of the gaps of the ventilation portion 58 are sizes that allow gas to pass through the ventilation portion 58 but do not allow the rubber composition to pass through the ventilation portion 58. The ventilation portion 58 allows gas to pass therethrough but does not allow the rubber composition to pass therethrough.

As long as the ventilation portion 58 is a porous metal that allows gas to pass therethrough but does not allow the rubber composition to pass therethrough, the configuration of the ventilation portion 58 is not particularly limited. An example of the porous metal forming the ventilation portion 58 is a sintered body of metal powder (sintered metal).

Examples of the metal forming the ventilation portion 58 include steel, aluminum alloys, stainless steel, and titanium alloys.

The porous metal is obtained by a known method.

As described above, each of the plurality of pieces 50 forming the mold 4 has the molding surface 52, and the cavity surface 32 for shaping the outer surface 10g of the tire 10 on the green tire 10r is formed by combining these pieces 50. The cavity surface 32 includes the molding surfaces 52 formed by the normal pieces 50n (hereinafter, molding surfaces 52n) and the molding surfaces 52 formed by the ventilation pieces 50v (hereinafter, molding surfaces 52v).

As described above, each ventilation piece 50v includes the non-ventilation portion 56 and the ventilation portion 58. The molding surface 52v of the ventilation piece 50v includes a non-ventilation surface 60 formed by the non-ventilation portion 56, and a ventilation surface 62 formed by the ventilation portion 58. The non-ventilation surface 60 and the ventilation surface 62 are each a part of the cavity surface 32. The cavity surface 32 includes the non-ventilation surface 60 and the ventilation surface 62.

As shown in FIG. 1, the ventilation surface 62 of the ventilation portion 58 faces the inside of the mold 4. The ventilation portion 58 extends from the ventilation surface 62 toward the outside of the mold 4. The ventilation portion 58 connects the inside and the outside of the mold 4.

In the mold 4, the ventilation portion 58 is composed of a rod-shaped member, like a vent piece used in a conventional mold. The ventilation portion 58 may be composed of a plate-shaped member extending in the circumferential direction. The ventilation portion 58 may be composed of a plate-shaped member extending in the axial direction.

Although not shown, a plurality of ventilation portions 58 may be provided in one ventilation piece 50v. In this case, the plurality of ventilation portions 58 may be arranged so as to be spaced part from each other in the circumferential direction or in the axial direction.

In the mold 4, a hole is provided in a piece 50 so as to penetrate the piece 50, and a rod-shaped ventilation portion 58 is inserted into the hole, whereby a ventilation piece 50v is formed. In the ventilation piece 50v, it is possible to replace the ventilation portion 58. A ventilation portion 58 may be formed directly in the hole provided in the piece 50. In this case, a ventilation piece 50v in which the ventilation portion 58 is integrated with the non-ventilation portion 56 is obtained.

As described above, in the mold 4, the ventilation surface 62 of the ventilation portion 58 is a part of the cavity surface 32, and the ventilation portion 58 provides communication between the inside and the outside of the mold 4. In the mold 4, air that exists between the cavity surface 32 and the green tire 10r is discharged through the ventilation portion 58. The ventilation portion 58 contributes to prevention of bareness. Since the rubber composition does not flow into the ventilation portion 58, no spew is formed in the portion where the ventilation portion 58 is provided. The mold 4 can reduce the number of spews formed in the tire 10. The mold 4 can contribute to improvement of the appearance quality of the tire 10.

In the mold 4, since the rubber composition does not flow into the ventilation portion 58, the occurrence of rubber clogging is also suppressed. The mold 4 can reduce the frequency of cleaning. The mold 4 contributes to improvement of productivity.

As described above, in the mold 4, the non-ventilation portion 56 is a metal cast, and the ventilation portion 58 is a porous metal. The surface state of the ventilation surface 62 of the ventilation portion 58 is rougher than the surface state of the non-ventilation surface 60 of the non-ventilation portion 56. In other words, a center line average roughness Ra1 of the ventilation surface 62 of the ventilation portion 58 is larger than a center line average roughness Ra2 of the non-ventilation surface 60 of the non-ventilation portion 56.

If the difference between the center line average roughness Ra1 of the ventilation surface 62 and the center line average roughness Ra2 of the non-ventilation surface 60 is excessively large, there is a concern that a portion formed by the ventilation surface 62 may be conspicuous on the outer surface 10g of the tire 10. In this case, the appearance quality improved by reducing the number of spews formed in the tire 10 is impaired in another sense.

In the mold 4, the center line average roughness Ra1 of the ventilation surface 62 is larger than the center line average roughness Ra2 of the non-ventilation surface 60, but the difference (Ra1-Ra2) between the center line average roughness Ra1 and the center line average roughness Ra2 is not greater than 40 µm.

In the mold 4, the difference (Ra1-Ra2) is inhibited from being excessively large. Since the difference (Ra1-Ra2) is appropriately maintained, the surface state of the ventilation surface 62 is close to the surface state of the non-ventilation surface 60, so that the outer surface 10g of the tire 10 on which the portion formed by the ventilation surface 62 is unlikely to be conspicuous is obtained. With the mold 4, the appearance quality is further improved.

The mold 4 and the production method for the tire 10 using the mold 4 allow the tire 10 having good appearance quality to be stably produced without impairing productivity.

In the mold 4, from the viewpoint that the portion formed by the ventilation surface 62 can be more unlikely to be conspicuous on the outer surface 10g of the tire 10, the difference (Ra1-Ra2) between the center line average roughness Ra1 and the center line average roughness Ra2 is more preferably not greater than 35 µm and further preferably not greater than 30 µm. From the viewpoint that the ventilation portion 58 can effectively contribute to air discharge, the difference (Ra1-Ra2) is preferably not less than 5 µm.

At the ventilation piece 50v of the mold 4, air that exists between the cavity surface 32 and the green tire 10r is discharged through the ventilation portion 58. The ventilation piece 50v does not need a through hole (vent hole) that provides communication between the inside and the outside of the mold 4. If a vent hole exists, the rubber composition flows into the vent hole, and a spew is formed. From the viewpoint of obtaining the tire 10 having no spew formed therein and having good appearance quality while improving productivity, the ventilation piece 50v preferably has no through hole that provides communication between the inside and the outside of the mold 4.

As described above, in the mold 4, the segment 42 shown in FIG. 1 is the ventilation piece 50v. At the segment 42 shown in FIG. 1, the ventilation portion 58 is provided on the equator plane CL. The ventilation portion 58 may be provided not on the equator plane CL but in a zone between the equator plane CL and an end of the tread surface 24. The ventilation portion 58 may be provided in each of a first zone between the equator plane CL and a first end of the tread surface 24 and a second zone between the equator plane CL and a second end of the tread surface 24. In the mold 4, as long as the ventilation portion 58 is provided at a position at which air is effectively discharged, the position of the ventilation portion 58 is not particularly limited.

The contour of the tread surface 24 of the motorcycle tire 10 is usually represented by an arc having a small radius of curvature. From the viewpoint of being able to effectively discharge air between the tread molding surface 40 and the green tire 10r, in the case where the segment 42 is formed as a ventilation piece 50v, the ventilation portion 58 is preferably provided on the equator plane CL as shown in FIG. 1.

In FIG. 1, a length indicated by reference sign D1 is the distance from the inner surface, of the ventilation portion 58, located inside the mold 4, that is, the ventilation surface 62, to an outer surface 58g, of the ventilation portion 58, located outside the mold 4. The length D1 is the length of the ventilation portion 58. The shortest distance measured along a line normal to the ventilation surface 62 is used as the length D1 of the ventilation portion 58.

In the mold 4, the length D1 of the ventilation portion 58 is preferably not greater than 20 mm. Accordingly, the resistance of air when passing through the ventilation portion 58 is reduced to be small. Air that exists between the cavity surface 32 and the green tire 10r is easily discharged through the ventilation portion 58. The mold 4 having this ventilation portion 58 can contribute to improvement of the appearance quality of the tire 10. From this viewpoint, the length D1 of the ventilation portion 58 is more preferably not greater than 15 mm. From the viewpoint of ensuring the stiffness of the ventilation portion 58, the length D1 is preferably not less than 5 mm.

In the mold 4, the porosity of the ventilation portion 58 is preferably not less than 20% and not greater than 98%.

When the porosity is set to be not less than 20%, the resistance of air when passing through the ventilation portion 58 is reduced to be small. Air that exists between the cavity surface 32 and the green tire 10r is easily discharged through the ventilation portion 58. The mold 4 having this ventilation portion 58 can contribute to improvement of the appearance quality of the tire 10.

When the porosity is set to be not greater than 98%, the rubber composition is inhibited from flowing into the gaps that exist in the ventilation portion 58. A good air discharge function of the ventilation portion 58 is maintained. The mold 4 can reduce the frequency of cleaning the mold 4. Since the ventilation portion 58 has the required stiffness, the ventilation portion 58 is less likely to be broken. The mold 4 contributes to improvement of productivity.

In the present invention, the porosity of the ventilation portion 58 is represented as the ratio of the total volume of the gaps to a volume obtained on the assumption that there is no gap in the ventilation portion 58.

In the mold 4, the center line average roughness Ra1 of the ventilation surface 62 is preferably not greater than 50 µm. Accordingly, the rubber composition is suitably inhibited from flowing into the ventilation portion 58. The outer surface 10g of the tire 10 on which the portion formed by the ventilation surface 62 is unlikely to be conspicuous is obtained. The mold 4 having this ventilation surface 62 allows the tire 10 having good appearance quality to be stably produced without impairing productivity. From the viewpoint that the ventilation portion 58 can effectively contribute to air discharge, the center line average roughness Ra1 of the ventilation surface 62 is preferably not less than 5 µm.

As described above, according to the present invention, a tire mold and a production method for a tire that allow a tire having good appearance quality to be stably produced without impairing productivity, are obtained.

### EXAMPLES

The following will describe the present invention in further detail by means of examples, etc., but the present invention is not limited to these examples.

### [Example 1]

A mold having the basic structure shown in FIG. 1, having specifications shown in Table 1 below, and used for producing a motorcycle tire (180/55R17) was prepared.

In Example 1, all the segments (pieces) forming the tread ring was formed as ventilation pieces. The fact that the ventilation pieces were used in Example 1 is represented as "Y" in the cell for "Ventilation piece" in Table 1 below.

A sintered body of metal powder was used as the ventilation portion of each ventilation piece. The material of the metal powder was stainless steel. The non-ventilation portions of the ventilation pieces and the normal pieces were each composed of a metal (stainless steel) cast.

The center line average roughness Ra1 of the ventilation surface was 50 µm, and the center line average roughness Ra2 of the non-ventilation surface was 20 µm. The length D1 of the ventilation portion was 40 mm.

The porosity of the ventilation portion was less than 20%. This is represented as "N" in the cell for "Porosity" in Table 1.

A vent hole (through hole) for air discharge was provided in the non-ventilation portion of each ventilation piece. This is represented as "Y" in the cell for "Vent hole" in Table 1. Since the tread ring of Example 1 has the ventilation portions, the number of vent holes provided in Example 1 is smaller than the number of vent holes provided in Comparative Example 1 described below.

### [Comparative Example 1]

A mold of Comparative Example 1 was obtained in the same manner as Example 1, except that no ventilation piece having a ventilation portion was used. The center line average roughness of the cavity surface of Comparative Example 1 was 5 µm. The fact that no ventilation piece was used in Comparative Example 1 is represented as "N" in the cell for "Ventilation piece" in Table 1 below. The mold of Comparative Example 1 is a conventional mold. As described above, vent holes for air discharge are provided in Comparative Example 1.

### [Examples 2 and 3 and Comparative Examples 2 and 3]

Molds of Examples 2 and 3 and Comparative Examples 2 and 3 were obtained in the same manner as Example 1, except that the center line average roughnesses Ra1 and Ra2 and the length D1 and the porosity of the ventilation portion were set as shown in Table 1 below. In Example 3, the porosity of the ventilation portion was in the range of not less than 20% and not greater than 98%. This is represented as "Y" in the cell for "Porosity" in Table 1.

### [Example 4]

A mold of Example 4 was obtained in the same manner as Example 3, except that no vent hole was provided in each ventilation piece. The fact that no vent hole was provided in each ventilation piece is represented as "N" in the cell for "Vent hole" in Table 1.

### [Air Dischargeability]

Tires were produced using a sample mold. The appearance of the tires was visually observed to determine the ratio of the occurrence of appearance defects caused by residual air. The results are shown in Table 1 below as an index with the result of Comparative Example 1 being regarded as 100. The lower the value is, the lower the ratio of the occurrence of appearance defects is, and the better the air dischargeability is.

### [Cleaning Frequency]

The number of times rubber clogging occurred and cleaning became necessary due to the production of the tires was checked. The results are shown in Table 1 below as an index with the result of Comparative Example 1 being regarded as 100. The higher the value is, the smaller the number of times of cleaning is, and the better the resistance to rubber clogging is.

### [Tire Appearance]

The appearance of the tires was observed, and sensory evaluation was made for appearance. In this evaluation, the appearance defects caused by residual air were excluded from the evaluation targets. The results are shown in Table 1 below as an index with a maximum score of 5 points. The higher the value is, the better the appearance quality is.

**[Table 1]**

| | Comp. Ex. 1 | Comp. Ex. 2 | Comp. Ex. 3 | Ex. 1 | Ex. 2 | Ex. 3 | Ex. 4 |
|---|---|---|---|---|---|---|---|
| Ventilation piece | N | Y | Y | Y | Y | Y | Y |
| Ra1 [µm] | - | 80 | 50 | 50 | 50 | 50 | 50 |
| Ra2 [µm] | - | 5 | 5 | 20 | 20 | 20 | 20 |
| Ra1-Ra2 [µm] | - | 75 | 45 | 30 | 30 | 30 | 30 |
| D1 [mm] | - | 40 | 40 | 40 | 20 | 20 | 20 |
| Porosity [%] | - | N | N | N | N | Y | Y |
| Vent hole | - | Y | Y | Y | Y | Y | N |
| Air dischargeability | 100 | 100 | 105 | 95 | 90 | 90 | 95 |
| Cleaning frequency | 100 | 95 | 100 | 105 | 105 | 110 | 115 |
| Tire appearance | 3.00 | 3.50 | 3.60 | 4.00 | 4.25 | 4.25 | 4.50 |

As shown in Table 1, it is confirmed that, in each Example, a tire having good appearance quality can be stably produced without impairing productivity. From the evaluation results, advantages of the present invention are clear.

### INDUSTRIAL APPLICABILITY

The above-described technology that allows a tire having good appearance quality to be stably produced without impairing productivity can also be applied to production of various tires.

### REFERENCE SIGNS LIST

- 4: mold
- 6: bladder
- 10r: green tire
- 10: tire
- 24: tread surface
- 32: cavity surface
- 34: tread ring
- 40: tread molding surface
- 42: segment
- 50, 50v, 50n: piece
- 52, 52v, 52n: molding surface of piece 50
- 56: non-ventilation portion
- 58: ventilation portion
- 60: non-ventilation surface
- 62: ventilation surface

## Claims

1. A tire mold having a cavity surface for shaping an outer surface of a tire on a green tire, the tire mold comprising a plurality of pieces, wherein
at least one piece among the plurality of pieces is a ventilation piece including a non-ventilation portion that is a metal cast and a ventilation portion,
the cavity surface includes a molding surface formed by the ventilation piece,
the molding surface includes a non-ventilation surface formed by the non-ventilation portion, and a ventilation surface formed by the ventilation portion, **characterised in that**
theventilation portion is a porous metal,
a center line average roughness Ra1 of the ventilation surface is larger than a center line average roughness Ra2 of the non-ventilation surface, and
a difference between the center line average roughness Ra1 and the center line average roughness Ra2 is not greater than 40 µm.

2. The tire mold according to claim 1, wherein the ventilation portion has a length of not greater than 20 mm.

3. The tire mold according to claim 1 or 2, wherein the ventilation portion has a porosity of not less than 20% and not greater than 98%.

4. The tire mold according to any one of claims 1 to 3, wherein the center line average roughness Ra1 of the ventilation surface is not greater than 50 µm.

5. The tire mold according to any one of claims 1 to 4, wherein the ventilation piece has no through hole that provides communication between an inside and an outside of the mold.

6. The tire mold according to any one of claims 1 to 5, further comprising a tread ring for shaping a tread surface of the tire on the green tire, wherein
the tread ring includes a plurality of segments aligned in a circumferential direction of the tire, and
at least one segment among the plurality of segments is the ventilation piece.

7. A production method for a tire, comprising a step of pressurizing and heating a green tire in a mold, wherein
the mold is the tire mold according to any one of claims 1 to 6.

## Patentansprüche

1. Reifenform mit einer Hohlraumfläche zum Formen einer Außenfläche eines Reifens auf einem Rohreifen, wobei die Reifenform eine Vielzahl von Teilen umfasst, wobei
mindestens ein Teil aus der Vielzahl von Teilen ein Belüftungsteil ist, der einen Nicht-Belüftungsabschnitt, der ein Metallguss ist, und einen Belüftungsabschnitt umfasst,
die Hohlraumfläche eine Formfläche umfasst, die durch das Belüftungsteil gebildet ist,
die Formfläche eine Nicht-Belüftungsfläche, die durch den Nicht-Belüftungsabschnitt gebildet ist, und eine Belüftungsfläche umfasst, die durch den Belüftungsabschnitt gebildet ist,
**dadurch gekennzeichnet, dass** der Belüftungsabschnitt ein poröses Metall ist,
eine Mittellinien-Durchschnittsrauheit Ra1 der Belüftungsfläche größer als eine Mittellinien-Durchschnittsrauheit Ra2 der Nicht-Belüftungsfläche ist, und
eine Differenz zwischen der Mittellinien-Durchschnittsrauheit Ra1 und der Mittellinien-Durchschnittsrauheit Ra2 nicht größer als 40 µm ist.

2. Reifenform nach Anspruch 1, wobei der Belüftungsabschnitt eine Länge von nicht mehr als 20 mm aufweist.

3. Reifenform nach Anspruch 1 oder 2, wobei der Belüftungsabschnitt eine Porosität von nicht weniger als 20 % und nicht mehr als 98 % aufweist.

4. Reifenform nach einem der Ansprüche 1 bis 3, wobei die Mittellinien-Durchschnittsrauheit Ra1 der Belüftungsfläche nicht größer als 50 µm ist.

5. Reifenform nach einem der Ansprüche 1 bis 4, wobei das Belüftungsteil kein Durchgangsloch aufweist, das eine Verbindung zwischen einer Innenseite und einer Außenseite der Form bereitstellt.

6. Reifenform nach einem der Ansprüche 1 bis 5, ferner umfassend einen Laufflächenring zum Formen einer Laufflächen-Oberfläche des Reifens auf dem Rohreifen, wobei
der Laufflächenring eine Vielzahl von Segmenten umfasst, die in einer Umfangsrichtung des Reifens ausgerichtet sind, und
mindestens ein Segment aus der Vielzahl von Segmenten das Belüftungsteil ist.

7. Herstellungsverfahren für einen Reifen, umfassend einen Schritt des Druckbeaufschlagens und Erwärmens eines Rohreifens in einer Form, wobei die Form die Reifenform nach einem der Ansprüche 1 bis 6 ist.

## Revendications

1. Moule de pneumatique ayant une surface à cavité pour former une surface extérieure d'un pneumatique sur un pneu cru, le moule de pneumatique comprenant une pluralité de pièces, dans lequel
au moins une pièce parmi la pluralité de pièces est une pièce de ventilation incluant une portion de non-ventilation qui est une coulée de métal et une portion de ventilation,
la surface à cavité inclut une surface de moulage formée par la pièce de ventilation,
la surface de moulage inclut une surface de non-ventilation formée par la portion de non-ventilation, et une surface de ventilation formée par la portion de ventilation,
**caractérisé en ce que**
la portion de ventilation est un métal poreux,
une rugosité moyenne de ligne centrale Ra1 de la surface de ventilation est plus grande qu'une rugosité moyenne de ligne centrale Ra2 de la surface de non-ventilation, et
une différence entre la rugosité moyenne de ligne centrale Ra1 et la rugosité moyenne de ligne centrale Ra2 n'est pas supérieure à 40 µm.

2. Moule de pneumatique selon la revendication 1, dans lequel la portion de ventilation a une longueur qui n'est pas supérieure à 20 mm.

3. Moule de pneumatique selon la revendication 1 ou 2, dans lequel la portion de ventilation a une porosité qui n'est pas inférieure à 20 % et qui n'est pas supérieure à 98 %.

4. Moule de pneumatique selon l'une quelconque des revendications 1 à 3, dans lequel la rugosité moyenne de ligne centrale Ra1 de la surface de ventilation n'est pas supérieure à 50 µm.

5. Moule de pneumatique selon l'une quelconque des revendications 1 à 4, dans lequel la pièce de ventilation n'a aucun trou traversant qui assure une communication entre l'intérieur et l'extérieur du moule.

6. Moule de pneumatique selon l'une quelconque des revendications 1 à 5, comprenant en outre un anneau de bande de roulement pour former une surface de bande de roulement du pneumatique sur le pneumatique cru, dans lequel
l'anneau de bande de roulement inclut une pluralité de segments alignés dans une direction circonférentielle du pneumatique, et
au moins un segment parmi la pluralité de segments est la pièce de ventilation.

7. Procédé de production pour un pneumatique, comprenant une étape de pressurisation et de chauffage d'un pneumatique cru dans un moule, dans lequel
le moule est le moule de pneumatique selon l'une quelconque des revendications 1 à 6.
